# EUROPÄISCHE PATENTSCHRIFT

(11) **EP 4 375 966 B1**
(45) Veröffentlichungstag und Bekanntmachung des Hinweises auf die Patenterteilung: **05.11.2025**
(21) Anmeldenummer: 23210698.9
(22) Anmeldetag: 17.11.2023
(51) Int. Cl.: G08G 1/00, G08G 1/16

(54) **VERFAHREN UND STEUERGERÄT ZUM BETREIBEN EINES MOTORRADS IN EINER FORMATION VON MOTORRÄDERN**
METHOD AND CONTROLLER FOR OPERATING A MOTORCYCLE IN A FORMATION OF MOTORCYCLES
PROCÉDÉ ET APPAREIL DE COMMANDE POUR FAIRE FONCTIONNER UNE MOTOCYCLETTE DANS UNE FORMATION DE MOTOCYCLETTES

(30) Priorität: 23.11.2022 DE 102022212482
(43) Veröffentlichungstag der Anmeldung: 29.05.2024
(73) Patentinhaber: Robert Bosch GmbH, 70442 Stuttgart (DE)
(72) Erfinder: Pfau, Lars, Yokohama, 224-0001 (JP); Moriarty, Daniel, Glenroy, 3046 (AU); Bain, Simeon, Montmorency, VIC 3094 (AU)

(56) Entgegenhaltungen:
- DE-A1- 102019 203 543
- DE-A1- 102020 202 986
- JP-A- 2019 185 799

## Beschreibung

### Gebiet der Erfindung

Die Erfindung betrifft ein Verfahren zum Betreiben eines Motorrads in einer Formation von Motorrädern, ein entsprechendes Steuergerät sowie ein entsprechendes Computerprogrammprodukt.

### Stand der Technik

Motorradfahrer können als Gruppe in einer Formation fahren. In der Formation fahren die Motorräder meist versetzt nebeneinander in zwei Reihen. Dabei orientiert sich der einzelne Motorradfahrer im Wesentlichen an dem vor ihm in der Reihe fahrenden Motorrad und an dem schräg vor ihm in der anderen Reihe fahrenden Motorrad. Innerhalb der Formation können die Motorräder mit relativ geringen Abständen zueinander fahren, ohne sich gegenseitig zu gefährden. Die Offenbarungen JP 20 19 185799 A, DE 10 2020 202986 A1 oder DE 10 2019 203543 A1 stellen Beispiele für den vorhandenen Stand der Technik dar.

### Offenbarung der Erfindung

Vor diesem Hintergrund werden mit dem hier vorgestellten Ansatz ein Verfahren zum Betreiben eines Motorrads in einer Formation von Motorrädern, ein entsprechendes Steuergerät, sowie ein entsprechendes Computerprogrammprodukt gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Bei dem hier vorgestellten Ansatz werden Positionen von hinter einem Motorrad fahrenden Fahrzeuge automatisiert erfasst und bestimmt, ob die erfassten Fahrzeuge einer Formation des Motorrads angehören. Mit diesen Informationen wird eine Kritikalität des jeweiligen Fahrzeugs für das Motorrad ermittelt. Dabei wird die Kritikalität bei gleicher Position für nicht zur Formation zugehörige Fahrzeuge größer ermittelt als für zur Formation gehörige Fahrzeuge, insbesondere Motorräder.

Durch den hier vorgestellten Ansatz kann beispielsweise ein Kollisionswarnsystem des Motorrads kürzere Abstände zu Mitgliedern der eigenen Formation tolerieren als zu Fremdfahrzeugen. So können bei Formationsfahrt unnötige Kollisionswarnungen vermieden werden. Ein Fahrer des Motorrads kann sich so besser auf die Formationsfahrt konzentrieren und eine Fahrsicherheit innerhalb der Formation kann erhöht werden.

Es wird ein Verfahren zum Betreiben eines Motorrads in einer Formation von Motorrädern vorgeschlagen, wobei Fahrzeuge in einem Rückraum hinter dem Motorrad erfasst werden, zu jedem erfassten Fahrzeug eine Relativposition des Fahrzeugs zum Motorrad und eine Formationszugehörigkeit des erfassten Fahrzeugs zu der Formation bestimmt wird, wobei ein Gefährdungspotenzial des Fahrzeugs für das Motorrad unter Verwendung der Relativposition und der Formationszugehörigkeit ermittelt wird, wobei das Gefährdungspotenzial von formationszugehörigen Fahrzeugen bei gleicher Relativposition geringer ermittelt wird, als von unzugehörigen Fahrzeugen.

Ideen zu Ausführungsformen der vorliegenden Erfindung können unter anderem als auf den nachfolgend beschriebenen Gedanken und Erkenntnissen beruhend angesehen werden.

Eine Formation von Motorrädern kann aus zumindest zwei Motorrädern bestehen. Die Motorräder der Formation fahren meist auf der gleichen Fahrspur. Dabei fahren die Motorräder mit einem Längsversatz und einem Seitenversatz beziehungsweise einem longitudinalen und lateralen Versatz zueinander. So ergibt sich das typische Erscheinungsbild der Formation als Zick-Zack-Linie.

Eine andere Formation, welche besonders in den USA gefahren wird, sind zwei oder manchmal drei Motorräder nebeneinander auf gleicher Höhe in einer Spur.

In manchen Fällen kann es auch vorkommen, dass die Motorräder in einer Reihe fahren.

Ein Rückraum kann sich hinter dem Motorrad erstrecken. Der Rückraum kann sich auch rechts und links seitlich hinter dem Motorrad erstrecken. Fahrzeuge hinter dem Motorrad können unter Verwendung eines nach hinten gerichteten Sensorsystems des Motorrads erfasst werden. Ein Fahrzeug kann dabei ein PKW, LKW oder ein Motorrad oder Quad sein. Das Sensorsystem kann zumindest einen Sensor aufweisen, dessen Erfassungsbereich den Rückraum zumindest anteilig abdeckt. Das Sensorsystem kann auch mehrere Sensoren umfassen. Erfassungsbereiche der Sensoren können sich überlappen. Die Sensoren können gleiche oder unterschiedliche Erfassungsprinzipien aufweisen. Beispielsweise kann als Sensor ein Kamerasensor, ein Radarsensor, ein Lidarsensor, ein Ultraschallsensor oder ähnliches eingesetzt werden.

Ein erfasstes Fahrzeug kann Mitglied der Formation sein oder nicht. Insbesondere können Motorräder Mitglieder der Formation sein. Ob das Fahrzeug Mitglied der Formation ist, kann unter Verwendung eines Erkennungsalgorithmus des Motorrads erkannt werden. Der Erkennungsalgorithmus kann Objektmerkmale der erkannten Fahrzeuge auswerten. Der Erkennungsalgorithmus kann ausgeben, ob das Fahrzeug als zugehörig oder fremd klassifiziert wird. Der Erkennungsalgorithmus kann eine Wahrscheinlichkeit der Formationszugehörigkeit berechnen. Wenn die Wahrscheinlichkeit über einem Schwellenwert liegt, wird das Fahrzeug als zugehörig zur Formation erkannt. Beispielsweise kann der Schwellenwert 50% sein.

Beispielsweise kann ein Bewegungsmuster des Fahrzeugs ausgewertet werden, um zu erkennen, ob das Fahrzeug zur Formation gehört. Bei mehreren Fahrzeugen kann eine relative Anordnung der Fahrzeuge zueinander ausgewertet werden, um die Formationszugehörigkeit zu erkennen. Der Erkennungsalgorithmus kann auf einem Steuergerät des Motorrads ausgeführt werden.

Ein Gefährdungspotenzial kann eine Kritikalität für das Motorrad durch ein anderes Fahrzeug abbilden. Beispielsweise kann das Gefährdungspotenzial eine Wahrscheinlichkeit für einen bevorstehenden Zusammenstoß des anderen Fahrzeugs mit dem eigenen Motorrad abbilden. Dabei können auch potenzielle Folgen des Zusammenstoßes, wie beispielsweise eine Sturzwahrscheinlichkeit und/oder Verletzungswahrscheinlichkeit betrachtet werden.

Das Gefährdungspotenzial kann für formationszugehörige Fahrzeuge, insbesondere formationszugehörige Motorräder anders ermittelt werden als für unzugehörige andere Fahrzeuge. Dabei wird der gleiche Wert des Gefährdungspotenzials bei unzugehörigen Fahrzeugen bereits bei einem wesentlich größeren Abstand erreicht als bei formationszugehörigen Fahrzeugen. Die formationszugehörigen Fahrzeuge können also wesentlich näher an das Motorrad heranfahren, bevor ihnen das gleiche Gefährdungspotenzial zugewiesen wird, wie einem weiter entfernten unzugehörigen fremden Fahrzeug.

Es kann ferner eine Relativgeschwindigkeit der Fahrzeuge zum Motorrad bestimmt werden. Das Gefährdungspotenzial kann ferner unter Verwendung der Relativgeschwindigkeit ermittelt werden. Die Relativgeschwindigkeit kann zusätzlich zur Relativposition verwendet werden, um das Gefährdungspotenzial zu ermitteln. Beispielsweise kann ein nahe am Motorrad fahrendes Fahrzeug mit einer ähnlichen Geschwindigkeit wie das Motorrad fahren. Dadurch weist das Fahrzeug näherungsweise keine Relativgeschwindigkeit zum Motorrad auf. Das nahe Fahrzeug mit der ähnlichen Geschwindigkeit weist für das Motorrad ein wesentlich geringeres Gefährdungspotenzial auf als ein nahes Fahrzeug, das sich auch noch mit einer relevanten Relativgeschwindigkeit an das Motorrad annähert. Umgekehrt kann ein momentan nahe am Motorrad fahrendes Fahrzeug, das sich von dem Motorrad entfernt ein geringeres Gefährdungspotenzial aufweisen als ein etwas weiter entferntes Fahrzeug mit näherungsweise gleichbleibendem Abstand zum Motorrad.

Zum Ermitteln des Gefährdungspotenzials kann ferner eine Absolutgeschwindigkeit des Motorrads und/oder der erfassten Fahrzeuge verwendet werden. Dabei kann berücksichtigt werden, dass bei höheren Geschwindigkeiten größere Abstände zwischen den Fahrzeugen erforderlich sind.

Das Gefährdungspotenzial kann über eine Mensch-Maschine-Schnittstelle des Motorrads für einen Fahrer des Motorrads bereitgestellt werden. Das Gefährdungspotenzial kann für jedes Fahrzeug im Rückraum separat bereitgestellt werden. Dadurch kann der Fahrer beispielsweise einen Abstand zu einem Fahrzeug mit erhöhtem Gefährdungspotenzial vergrößern, indem er beschleunigt, bremst oder ausweicht. Ebenso kann der Fahrer einem Fahrer des anderen Fahrzeugs beispielsweise durch Gesten oder über einen anderen Kommunikationsweg mitteilen, dass er eine Gefährdung darstellt.

Das Gefährdungspotenzial des erfassten Fahrzeugs kann über eine Kommunikationsschnittstelle des Motorrads an das erfasste Fahrzeug übermittelt werden. Das Gefährdungspotenzial kann dann für einen Fahrer des anderen Fahrzeugs bereitgestellt werden. So kann dieser Fahrer die Gefährdung des vorausfahrenden Motorrads erkennen und darauf entsprechend reagieren, indem er seine Geschwindigkeit verringert und/oder einen Abstand zum vorausfahrenden Motorrad vergrößert. Ebenso kann das andere Fahrzeug automatisiert auf das übermittelte Gefährdungspotenzial reagieren und beispielsweise einen verwendeten Mindestabstand eines abstandsgeregelten Tempomats vergrößern.

Das Gefährdungspotenzial kann über eine optische Signalisierungseinrichtung des Motorrads für andere Verkehrsteilnehmer bereitgestellt werden. Eine Signalisierungseinrichtung kann Leuchten und/oder Symbole aufweisen. Die Signalisierungseinrichtung kann beispielsweise ein Gefahrensymbol und/oder Text darstellen, um das Gefährdungspotenzial anzuzeigen. Dabei können in unterschiedlichen Situationen unterschiedliche Gefahrensymbole und/oder Texte angezeigt werden. Beispielsweise kann eine Aufforderung zum Halten von mehr Abstand dargestellt werden. Ebenso kann die Gefahr eines Auffahrunfalls dargestellt werden. Das Gefährdungspotenzial kann auch durch einen Farbton dargestellt werden.

Das Gefährdungspotenzial kann bereitgestellt werden, wenn das Gefährdungspotenzial größer als ein Schwellenwert ist. Ein Schwellenwert kann vordefiniert sein. Der Schwellenwert kann so gewählt sein, dass die Warnung bezüglich des Gefährdungspotenzials nur bereitgestellt wird, wenn das Gefährdungspotenzial relevant ist. Wenn das Gefährdungspotenzial kleiner als der Schwellenwert ist, kann auf das Bereitstellen des Gefährdungspotenzials verzichtet werden.

Das Gefährdungspotenzial kann bereitgestellt werden, wenn das Gefährdungspotenzial länger als eine Toleranzzeitdauer größer als der Schwellenwert ist. Wenn das Gefährdungspotenzial nur kurz größer als der Schwellenwert ist, kann auf das Bereitstellen des Gefährdungspotenzials verzichtet werden, um einen schnellen Wechsel von Bereitstellen und wieder nicht Bereitstellen zu verhindern.

Ein Unterschreiten eines Mindestabstands kann so beispielsweise beim Einfahren in eine Kurve kurzzeitig toleriert werden. Durch die Toleranzzeitdauer kann eine erhöhte Störungsunempfindlichkeit erreicht werden. Zusätzlich kann eine Häufigkeit des Bereitstellens reduziert werden.

Es kann ferner ein Formationsgefährdungspotenzial zumindest der im Rückraum befindlichen formationszugehörigen Fahrzeuge ermittelt werden. Ein Formationsgefährdungspotenzial kann das Gefährdungspotenzial von mehreren Fahrzeugen der Formation zusammenfassen und gemeinsam abbilden. Das Formationsgefährdungspotenzial kann basierend auf der Geschwindigkeit der gesamten Formation und der gemeinsamen Entfernung zwischen den Mitgliedern der Formation ermittelt werden. Das Formationsgefährdungspotenzial kann über die Mensch-Maschine-Schnittstelle, die Kommunikationsschnittstelle, und/oder die Signalisierungseinrichtung bereitgestellt werden. Das Formationsgefährdungspotenzial kann bereitgestellt werden, wenn sie größer als der Schwellenwert ist. Ebenso kann das Formationsgefährdungspotenzial bereitgestellt werden, wenn sie länger als die Toleranzzeitdauer größer als der Schwellenwert ist.

Das Verfahren ist vorzugsweise computerimplementiert und kann beispielsweise in Software oder Hardware oder in einer Mischform aus Software und Hardware beispielsweise in einem Fahrerassistenzsystem implementiert sein.

Der hier vorgestellte Ansatz schafft ferner ein Steuergerät in Form eines Fahrerassistenzsystems für ein Fahrzeug, wobei das Fahrerassistenzsystem dazu ausgebildet ist, um die Schritte einer Variante des hier vorgestellten Verfahrens in entsprechenden Einrichtungen durchzuführen, anzusteuern bzw. umzusetzen.

Das Steuergerät bzw. Fahrerassistenzsystem kann ein elektrisches Gerät mit zumindest einer Recheneinheit zum Verarbeiten von Signalen oder Daten, zumindest einer Speichereinheit zum Speichern von Signalen oder Daten, und zumindest einer Schnittstelle und/oder einer Kommunikationsschnittstelle zum Einlesen oder Ausgeben von Daten, die in ein Kommunikationsprotokoll eingebettet sind, sein. Die Recheneinheit kann beispielsweise ein Signalprozessor, ein sogenannter System-ASIC oder ein Mikrocontroller zum Verarbeiten von Sensorsignalen und Ausgeben von Datensignalen in Abhängigkeit von den Sensorsignalen sein. Die Speichereinheit kann beispielsweise ein Flash-Speicher, ein EPROM oder eine magnetische Speichereinheit sein. Die Schnittstelle kann als Sensorschnittstelle zum Einlesen der Sensorsignale von einem Sensor und/oder als Aktorschnittstelle zum Ausgeben der Datensignale und/oder Steuersignale an einen Aktor ausgebildet sein. Die Kommunikationsschnittstelle kann dazu ausgebildet sein, die Daten drahtlos und/oder leitungsgebunden einzulesen oder auszugeben. Die Schnittstellen können auch Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale des Steuergeräts und des Verfahrens in geeigneter Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.

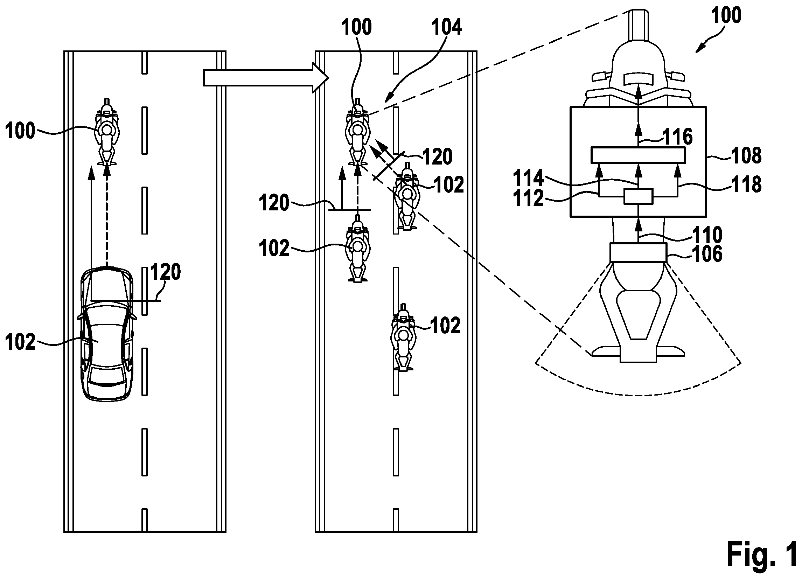

Fign. 1 bis 3 zeigen Darstellungen von Verkehrssituationen und eines unter Verwendung eines Verfahrens gemäß einem Ausführungsbeispiel ermittelten Gefährdungspotenzials.

Die Figuren sind lediglich schematisch und nicht maßstabsgetreu. Gleiche Bezugszeichen bezeichnen gleiche oder gleichwirkende Merkmale.

### Ausführungsformen der Erfindung

Fig. 1 zeigt eine Darstellung von zwei unterschiedlichen Verkehrssituationen mit hinter einem Motorrad 100 fahrenden Fahrzeugen 102. In der ersten Verkehrssituation fährt als Fahrzeug 102 ein PKW hinter dem Motorrad 100. Der PKW fährt zu dicht auf das Motorrad 100 auf und stellt somit eine Gefahr für das Motorrad 100 dar. In der zweiten Verkehrssituation fahren als Fahrzeuge 102 mehrere Motorräder in einer Formation 104 hinter dem Motorrad 100. Beispielsweise fahren hier drei Motorräder in versetzt gestaffelter Formation 104 hinter dem Motorrad 100. Die Formation 104 bildet dabei eine Zick-Zack-Linie. Dabei fahren die zur Formation 104 formationszugehörigen Motorräder dicht auf das Motorrad 100 und aufeinander auf. Die Motorräder fahren dichter als der PKW auf das Motorrad 100 auf. Aufgrund der Formationszugehörigkeit der Motorräder fahren die Motorräder jedoch als Pulk und gefährden sich durch die resultierenden geringen Abstände nicht.

Bei dem hier vorgestellten Ansatz werden die in einem Rückraum hinter dem Motorrad 100 fahrenden Fahrzeuge 102 durch ein Sensorsystem 106 des Motorrads 100 erfasst. In einem Steuergerät 108 gemäß dem hier vorgestellten Ansatz werden Informationen 110 des Sensorsystems 106 ausgewertet und Relativpositionen 112 der Fahrzeuge 102 zum Motorrad 100 bestimmt. Ferner wird im Steuergerät 108 die Formationszugehörigkeit 114 der Fahrzeuge 102 erkannt. Basierend auf seiner Relativposition 112 und der Formationszugehörigkeit 114 wird für jedes Fahrzeug 102 ein Gefährdungspotenzial 116 ermittelt.

Wenn ein Fahrzeug 102 zur Formation 104 gehört, wird für dieses Fahrzeug 102 bei gleicher Relativposition 112 ein geringeres Gefährdungspotenzial 116 ermittelt als für ein nicht zur Formation 104 gehörendes Fahrzeug 102. Dies gilt auch für seitlich versetzt hinter dem Motorrad 100 fahrende Fahrzeuge 102.

In einem Ausführungsbeispiel wird im Steuergerät 108 ferner eine Relativgeschwindigkeit 118 der Fahrzeuge 102 zum Motorrad 100 bestimmt. Beim Ermitteln des Gefährdungspotenzials 116 wird dabei ferner die Relativgeschwindigkeit 118 berücksichtigt. Dadurch wird einem beispielsweise zur Formation 104 zugehörigen Fahrzeug 102, das sich von einer Relativposition 112 mit einer Relativgeschwindigkeit 118 an das Motorrad 100 annähert, ein größeres Gefährdungspotenzial 116 zugewiesen als einem zur Formation 104 zugehörigen Fahrzeug 102, das an der gleichen Relativposition 112 mit näherungsweise konstantem Abstand zum Motorrad 100 fährt.

In einem Ausführungsbeispiel wird unter Verwendung der Formationszugehörigkeit 114 ein Mindestabstand 120 für das jeweilige Fahrzeug 102 bestimmt. Wenn das Fahrzeug 102 näher an das Motorrad 100 heranfährt als sein Mindestabstand 120, wird diesem Fahrzeug 102 ein erhöhtes Gefährdungspotenzial 116 zugewiesen. Der Mindestabstand 120 ist für formationszugehörige Fahrzeuge 102 kleiner als für unzugehörige Fahrzeuge 102.

In einem Ausführungsbeispiel werden formationszugehörige Fahrzeuge 102 identifiziert, wenn eine Gruppenfahrsituation beziehungsweise eine Formationsfahrt erkannt wird.

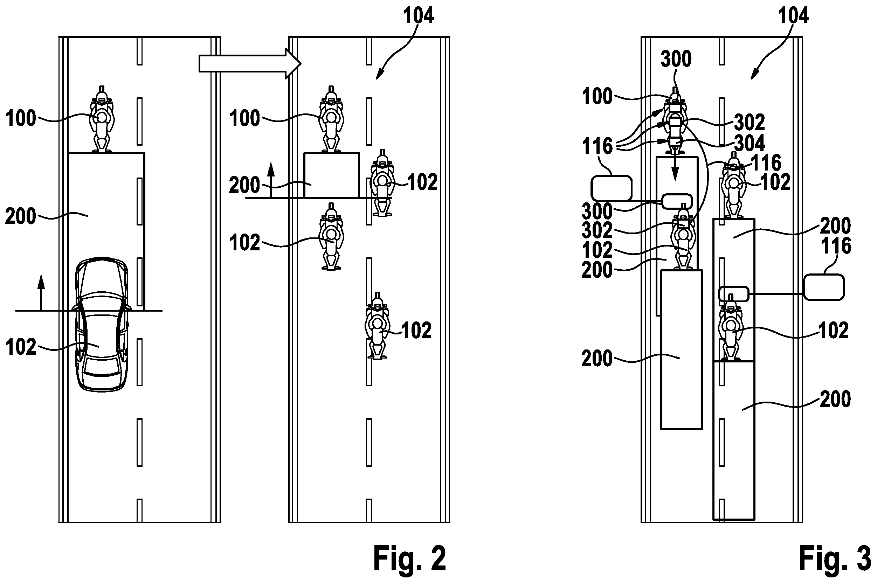

Fig. 2 zeigt eine Darstellung von zwei unterschiedlichen Verkehrssituationen mit hinter einem Motorrad 100 fahrenden Fahrzeugen 102. Die Verkehrssituationen entsprechen dabei im Wesentlichen den Verkehrssituationen in Fig. 1. Zusätzlich dazu ist hier für die Fahrzeuge 102 in beiden Verkehrssituationen je ein Gefährdungsbereich 200 dargestellt. Je weiter das Fahrzeug 102 in den jeweiligen Gefährdungsbereich 200 eindringt, umso größer ist das durch das Fahrzeug 102 dargestellte Gefährdungspotenzial für das Motorrad 100.

Der Gefährdungsbereich 200 ist für zur Formation 104 unzugehörige Fahrzeuge 102 wesentlich größer als für zur Formation 104 formationszugehörige Fahrzeuge 102 beziehungsweise Motorräder. So wird für unzugehörige Fahrzeuge 102 bei einem wesentlich größeren Abstand zum Motorrad 100 bereits das Gefährdungspotenzial erkannt.

Fig. 3 zeigt eine Darstellung einer Gruppenfahrsituation mit ermittelten Gefährdungspotenzialen 116 unter Verwendung eines Verfahrens gemäß einem Ausführungsbeispiel. Die Gruppenfahrsituation entspricht dabei im Wesentlichen der zweiten Verkehrssituation in Fig. 1 und Fig. 2. Alle Fahrzeuge 102 sind Motorräder und sind zu der Formation 104 zugehörig. Zusätzlich ist hier für jedes Motorrad ein Gefährdungsbereich 200 dargestellt. Je weiter das Motorrad in den Gefährdungsbereich 200 eindringt, umso größer wird sein Gefährdungspotenzial 116 für das jeweils vorausfahrende Motorrad ermittelt.

In einem Ausführungsbeispiel wird dem Fahrer des vorausfahrenden Motorrads 100 über eine Mensch-Maschine-Schnittstelle 300 des Motorrads 100 das von dem ihm folgenden Motorrad ausgehende Gefährdungspotenzial 116 dargestellt. So kann der Fahrer auf das im Rückraum bestehende Gefährdungspotenzial 116 reagieren und die Verkehrssituation durch einen gezielten Eingriff, wie beispielsweise Bremsen, Beschleunigen und/oder Ausweichen so verändern, dass das Gefährdungspotenzial 116 verringert wird.

Alternativ oder ergänzend kann der Fahrer beispielsweise durch Handzeichen und/oder Sprechfunk die Formation 104 auffordern, das Gefährdungspotenzial 116 zu verringern, also mehr Abstand zu halten und/oder langsamer beziehungsweise weniger aggressiv zu fahren.

In einem Ausführungsbeispiel wird dem Fahrer des folgenden Motorrads das durch ihn verursachte Gefährdungspotenzial 116 auf einer Mensch-Maschine-Schnittstelle 300 seines Motorrads angezeigt. Beispielsweise kann das Gefährdungspotenzial 116 über eine Kommunikationsschnittstelle 302 zwischen den Motorrädern übermittelt werden und beispielsweise in einem Cockpit oder Headup-Display des folgenden Motorrads angezeigt werden.

In einem Ausführungsbeispiel wird das Gefährdungspotenzial 116 auf einer Signalisierungseinrichtung 304 des Motorrads 100 für nachfolgende Fahrzeuge 102 angezeigt. Beispielsweise kann das Gefährdungspotenzial 116 durch Symbole, Text und/oder Signalfarben angezeigt werden. Dabei können insbesondere immer auffälligere Symbole, Textdarstellungen und/oder Signalfarben verwendet werden, je größer das angezeigte Gefährdungspotenzial 116 ist.

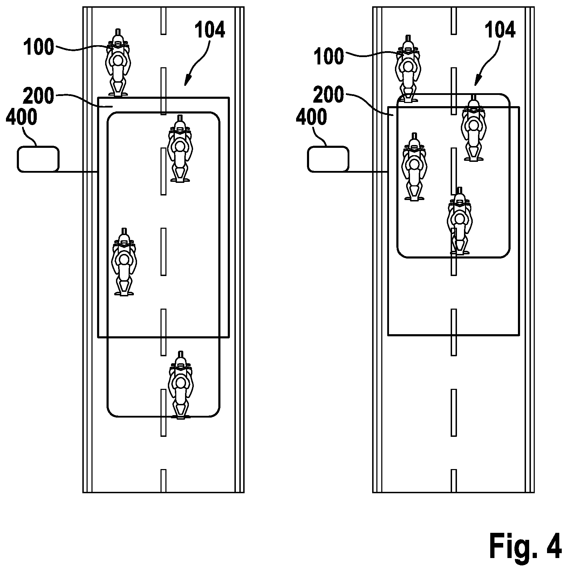

Fig. 4 zeigt eine Darstellung von zwei unterschiedlichen Gruppenfahrsituationen mit unterschiedlichen Formationsgefährdungspotenzialen 400. In beiden Gruppenfahrsituationen fahren vier Motorräder in Formation 104. In beiden Gruppenfahrsituationen ist ein Gefährdungsbereich 200 für die ganze Formation 104 im Rückraum hinter dem ersten Motorrad 100 der Formation 104 dargestellt.

In der ersten Gruppenfahrsituation ist die Formation 104 auseinandergezogen und zwei der formationszugehörigen Motorräder fahren innerhalb des Gefährdungsbereichs 200, während eines der Motorräder außerhalb des Gefährdungsbereichs 200 fährt. Dabei stellen die hinter dem Motorrad 100 fahrenden Motorräder der Formation 104 ein niedriges Formationsgefährdungspotenzial 400 dar.

In der zweiten Gruppenfahrsituation ist die Formation 104 zusammengezogen und drei der formationszugehörigen Motorräder fahren innerhalb des Gefährdungsbereichs 200. Dabei stellen die hinter dem Motorrad 100 fahrenden Motorräder der Formation 104 ein erhöhtes Formationsgefährdungspotenzial 400 dar.

Um das Formationsgefährdungspotenzial 400 zu ermitteln, werden insbesondere eine Formationsgeschwindigkeit und eine mittlere Distanz zwischen den formationszugehörigen Motorrädern berücksichtigt.

Nachfolgend werden mögliche Ausgestaltungen der Erfindung nochmals zusammengefasst bzw. mit einer geringfügig anderen Wortwahl dargestellt.

Es wird die Bestimmung von Informationen zur hinteren Kritikalität bei der Gruppenfahrt vorgestellt.

Es wird eine Berechnung und Anzeige von Informationen über die hintere Kritikalität (Sicherheit) für den Fahrer vorgeschlagen, während dieser in einer Gruppe fährt. Es wird auch vorgeschlagen, die Informationen über die hintere Kritikalität an andere Motorradsysteme zur Funktionsanpassung und/oder andere Fahrzeuge weiterzugeben.

Während des Gruppenfahrmodus wird die hintere Kritikalität von Objekten in einem Pulk von Gruppenfahrern berechnet. In einer Ausführungsform wird die hintere Kritikalität bzw. Heckkritikalität von anderen Verkehrsobjekten berechnet. In einer Ausführungsform wird das Gefährdungspotenzial des gesamten Verbandes, insbesondere der Teile des Verbandes hinter dem Fahrer, berechnet.

In einer Ausführungsform wird die hintere Kritikalität an den Fahrer und andere Systeme weitergegeben.

Es wird eine Methode zur Verbesserung des Verständnisses des Fahrers für die Sicherheit der Fahrformation und der Welt vorgestellt. Insbesondere wird die Berechnung des Gefährdungspotenzials der hinteren Teile der Formation während eines Gruppenfahrszenarios vorgestellt.

Das System umfasst einen oder mehrere nach hinten gerichtete Sensoren zur Erkennung von Objekten im hinteren Fahrzeugbereich und zur Durchführung von Kritikalitätsberechnungen. Das System umfasst ferner ein Modul zur Erkennung von Gruppenfahrten am oder mit dem hinteren Sensor und ein bordeigenes Kommunikationssystem, wie z. B. CAN. Das System kann auch andere Systeme wie ABS, Motorradstabilitätsregler (MSC), Traktionskontrollsysteme (TCS), Mensch-Maschine-Schnittstelle (HMI) usw. umfassen. Darüber hinaus kann das System ein Funkkommunikationssystem und/oder eine Warnanzeige für andere Fahrzeuge umfassen, um diese über die aktuelle Gefährdung zu informieren, die sie von hinten für den Fahrer darstellen.

Beim Fahren in einer Gruppenformation ist die Verkehrssituation zwischen normalen Vierrad (4W) und Zweirad (2W) Verkehrssicherheitsszenarien sehr unterschiedlich. Objekte, die Teil der Formation sind und solche, die es nicht sind, haben unterschiedliche Auswirkungen auf die Sicherheit des Fahrers. Objekte können sich in diesen Situationen anders verhalten, als es ein herkömmliches Fahrerassistenzsystem (Advanced Rider Assistance System, ARAS) erwarten würde.

Der hier vorgestellte Ansatz bezieht sich auf eine spezifische Funktion zur Berechnung des Gefährdungspotenzials von Objekten im rückwärtigen Verkehr für den Fahrer, wenn er in einer Gruppe fährt, und zur Bereitstellung dieser Informationen an verschiedene Schnittstellen, so dass die Situation für den Fahrer und den umgebenden Verkehr sicherer und komfortabler gestaltet werden kann. Kritikalität bedeutet hier eine probabilistische Berechnung des Risikos für die Sicherheit des Fahrers, wie z. B. die Wahrscheinlichkeit und die Folgen eines Zusammenstoßes.

Diese Informationen können dann verwendet werden, um dem Fahrer anzuzeigen, dass er eingreifen oder sich der erhöhten Gefährdung bewusstwerden soll. Zum Beispiel kann er langsamer fahren.

Oder der Fahrer könnte die Informationen nutzen, um andere in der Gruppe mit Gesten zu veranlassen, ihre Fahrsituation anzupassen.

Oder das Motorrad könnte die eskalierte Situation per Display oder über Funk an andere Fahrzeuge weitergeben, damit diese eingreifen können.

Das Gefährdungspotenzial für den Fahrer wird basierend auf der Information von einem oder mehreren hinteren Sensoren, wie z. B. ein Radar- oder Kamerasystem, berechnet.

Zunächst wird eine Gruppenfahrsituation erkannt. Dann werden Gruppenfahrobjekte erkannt und markiert. Diese Objekte werden im Systemspeicher als Gruppenfahrobjekte gespeichert. Das System erstellt dann Vorhersagen und Berechnungen für verschiedene Situationen.

Zum Beispiel wird erkannt, dass ein Objekt, welches hinten in einer Gruppe mitfährt, gefährlich nahe an das Ego-Fahrzeug heranfährt, wenn das Objekt über einen längeren Zeitraum in einer nicht erlaubten Zone erfasst wird (wenn es in einer Gruppe mitfährt). Diese Zone kann für nicht in der Gruppe fahrende Objekte unterschiedlich sein, da in der Gruppe fahrenden Objekten erlaubt werden kann, näher am Fahrer zu fahren.

In Fig. 1 werden die Einstellungen der Kritikalitätsberechnung angepasst, sobald die hintere Gruppenfahrsituation und die Objekte identifiziert sind.

Wenn sich ein hinteres, in einer Gruppe fahrendes Objekt dem Fahrer auf unsichere Weise nähert und/oder eine mögliche Kollision vorausgesagt wird, hat das Objekt eine Zeit bis zur Kollision (TTC), die unter einem zulässigen Schwellenwert liegt. Diese Einstellung kann für nicht in der Gruppe fahrende Objekte unterschiedlich sein.

In Fig. 2 werden die Einstellungen der Kritikalitätsberechnung angepasst, sobald die hintere Fahrsituation und die Objekte identifiziert sind. Die Kollisionswahrscheinlichkeit für alle Objekte wird vorhergesagt, aber die Schwellenwerte werden in einer Gruppenfahrsituation anders festgelegt.

Wenn der Abstand zwischen den in der Gruppe fahrenden Objekten gefährlich gering ist und/oder andere in der Gruppe fahrende Objekte sich einander auf gefährliche Weise nähern, sind die kollektiven Abstände (z. B. in Längs- oder Querrichtung) der Gruppe geringer als für die kollektive Gruppengeschwindigkeit empfohlen.

Wenn diese Kritikalitätsinformationen empfangen werden, können sie für den Fahrer visualisiert werden.

In den Fign. 3 und 4 zeigt das große Rechteck mit dem Farbverlauf auf der Straße den möglichen Kritikalitätswert auf der Grundlage der Objektentfernung an, und die Farbblasen an der Seite zeigen das Gefährdungspotenzial des aktuellen Objekts (Fig. 3) oder der Formation (Fig. 4) an.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Betreiben eines Motorrads (100) in einer Formation (104) von Motorrädern, wobei Fahrzeuge (102) in einem Rückraum hinter dem Motorrad (100) erfasst werden, zu jedem erfassten Fahrzeug (102) eine Relativposition (112) des Fahrzeugs (102) zum Motorrad (100) und eine Formationszugehörigkeit (114) des erfassten Fahrzeugs (102) zu der Formation (104) bestimmt wird, wobei ein Gefährdungspotenzial (116) des Fahrzeugs (102) für das Motorrad (100) unter Verwendung der Relativposition (112) und der Formationszugehörigkeit (114) ermittelt wird, wobei das Gefährdungspotenzial (116) von formationszugehörigen Fahrzeugen (102) bei gleicher Relativposition (112) geringer ermittelt wird, als von unzugehörigen Fahrzeugen (102).

2. Verfahren gemäß Anspruch 1, bei dem ferner eine Relativgeschwindigkeit (118) der Fahrzeuge (102) zum Motorrad (100) bestimmt wird, wobei das Gefährdungspotenzial (116) ferner unter Verwendung der Relativgeschwindigkeit (118) ermittelt wird.

3. Verfahren gemäß einem der vorhergehenden Ansprüche, bei dem das Gefährdungspotenzial (116) über eine Mensch-Maschine-Schnittstelle (300) des Motorrads (100) für einen Fahrer des Motorrads (100) bereitgestellt wird.

4. Verfahren gemäß einem der vorhergehenden Ansprüche, bei dem das Gefährdungspotenzial (116) des erfassten Fahrzeugs (102) über eine Kommunikationsschnittstelle (302) des Motorrads (100) an das erfasste Fahrzeug (102) übermittelt wird.

5. Verfahren gemäß einem der vorhergehenden Ansprüche, bei dem das Gefährdungspotenzial (116) über eine optische Signalisierungseinrichtung (304) des Motorrads (100) für andere Verkehrsteilnehmer bereitgestellt wird.

6. Verfahren gemäß einem der Ansprüche 3 bis 5, bei dem das Gefährdungspotenzial (116) bereitgestellt wird, wenn das Gefährdungspotenzial (116) größer als ein Schwellenwert ist.

7. Verfahren gemäß Anspruch 6, bei dem das Gefährdungspotenzial (116) bereitgestellt wird, wenn das Gefährdungspotenzial (116) länger als eine Toleranzzeitdauer größer als der Schwellenwert ist.

8. Verfahren gemäß einem der vorhergehenden Ansprüche, bei dem ferner ein Formationsgefährdungspotenzial (400) zumindest der im Rückraum befindlichen formationszugehörigen Fahrzeuge (102) ermittelt wird.

9. Steuergerät (108), wobei das Steuergerät (108) dazu konfiguriert ist, das Verfahren gemäß einem der vorhergehenden Ansprüche in entsprechenden Einrichtungen auszuführen, umzusetzen und/oder anzusteuern.

10. Computerprogrammprodukt, das dazu eingerichtet ist, einen Prozessor bei Ausführung des Computerprogrammprodukts dazu anzuleiten, das Verfahren gemäß einem der Ansprüche 1 bis 8 auszuführen, umzusetzen und/oder anzusteuern.

11. Maschinenlesbares Speichermedium, auf dem das Computerprogrammprodukt gemäß Anspruch 10 gespeichert ist.

## Claims

1. Method for operating a motorcycle (100) in a formation (104) of motorcycles, wherein vehicles (102) are detected in a rear area behind the motorcycle (100), a relative position (112) of the vehicle (102) with respect to the motorcycle (100) and a formation association (114) of the detected vehicle (102) with the formation (104) are determined for each detected vehicle (102), wherein a hazard potential (116) of the vehicle (102) for the motorcycle (100) is determined using the relative position (112) and the formation association (114), wherein the hazard potential (116) of vehicles (102) associated with the formation, with the same relative position (112), is determined to be lower than that of unassociated vehicles (102).

2. Method according to Claim 1, in which a relative speed (118) of the vehicles (102) with respect to the motorcycle (100) is also determined, wherein the hazard potential (116) is also determined using the relative speed (118).

3. Method according to one of the preceding claims, in which the hazard potential (116) is provided for a rider of the motorcycle (100) via a man-machine interface (300) of the motorcycle (100).

4. Method according to one of the preceding claims, in which the hazard potential (116) of the detected vehicle (102) is transmitted to the detected vehicle (102) via a communication interface (302) of the motorcycle (100).

5. Method according to one of the preceding claims, in which the hazard potential (116) is provided for other road users via an optical signalling device (304) of the motorcycle (100).

6. Method according to one of Claims 3 to 5, in which the hazard potential (116) is provided if the hazard potential (116) is greater than a threshold value.

7. Method according to Claim 6, in which the hazard potential (116) is provided if the hazard potential (116) is greater than the threshold value for longer than a tolerance period.

8. Method according to one of the preceding claims, in which a formation hazard potential (400) of at least the vehicles (102) associated with the formation and located in the rear area is also determined.

9. Control unit (108), wherein the control unit (108) is configured to carry out, implement and/or control the method according to one of the preceding claims in corresponding devices.

10. Computer program product which is configured to instruct a processor to carry out, implement and/or control the method according to one of Claims 1 to 8 when executing the computer program product.

11. Machine-readable storage medium on which the computer program product according to Claim 10 is stored.

## Revendications

1. Procédé pour faire fonctionner une motocyclette (100) dans une formation (104) de motocyclettes, dans lequel des véhicules (102) sont détectés dans un espace arrière derrière la motocyclette (100), une position relative (112) du véhicule (102) par rapport à la motocyclette (100) et une appartenance à la formation (114) du véhicule (102) détecté par rapport à la formation (104) sont déterminées pour chaque véhicule (102) détecté, un potentiel de danger (116) du véhicule (102) pour la motocyclette (100) étant déterminé en utilisant la position relative (112) et l'appartenance à la formation (114), le potentiel de danger (116) de véhicules (102) appartenant à la formation étant déterminé comme étant moindre pour une même position relative (112) que celui de véhicules (102) n'appartenant pas à la formation.

2. Procédé selon la revendication 1, dans lequel une vitesse relative (118) des véhicules (102) par rapport à la motocyclette (100) est également déterminée, le potentiel de danger (116) étant également déterminé en utilisant la vitesse relative (118).

3. Procédé selon l'une quelconque des revendications précédentes, dans lequel le potentiel de danger (116) est fourni à un conducteur de la motocyclette (100) via une interface homme-machine (300) de la motocyclette (100).

4. Procédé selon l'une quelconque des revendications précédentes, dans lequel le potentiel de danger (116) du véhicule détecté (102) est transmis au véhicule détecté (102) par l'intermédiaire d'une interface de communication (302) de la motocyclette (100).

5. Procédé selon l'une quelconque des revendications précédentes, dans lequel le potentiel de danger (116) est fourni aux autres usagers de la route par l'intermédiaire d'un dispositif de signalisation optique (304) de la motocyclette (100).

6. Procédé selon l'une quelconque des revendications 3 à 5, dans lequel le potentiel de danger (116) est fourni lorsque le potentiel de danger (116) est supérieur à une valeur seuil.

7. Procédé selon la revendication 6, dans lequel le potentiel de danger (116) est fourni lorsque le potentiel de danger (116) est supérieur à la valeur seuil pendant une durée supérieure à une durée de tolérance.

8. Procédé selon l'une quelconque des revendications précédentes, dans lequel on détermine en outre un potentiel de danger pour la formation (400) au moins des véhicules (102) appartenant à la formation et se trouvant dans l'espace arrière.

9. Appareil de commande (108), l'appareil de commande (108) étant configuré pour exécuter, mettre en œuvre et/ou commander le procédé selon l'une quelconque des revendications précédentes dans des dispositifs correspondants.

10. Produit de programme d'ordinateur adapté pour, lors de l'exécution du produit de programme d'ordinateur, guider un processeur pour exécuter, mettre en œuvre et/ou commander le procédé selon l'une des revendications 1 à 8.

11. Support de stockage lisible par machine sur lequel est stocké le produit programme d'ordinateur selon la revendication 10.
